(19) Europäisches Patentamt / European Patent Office / Office européen des brevets

(11) **EP 3 591 078 B1**

(12) **EUROPÄISCHE PATENTSCHRIFT**

(45) Veröffentlichungstag und Bekanntmachung des Hinweises auf die Patenterteilung:
**22.12.2021 Patentblatt 2021/51**

(21) Anmeldenummer: **18182027.5**

(22) Anmeldetag: **05.07.2018**

(51) Int Cl.:
*C21D 6/00* (2006.01)   *B22F 3/10* (2006.01)
*B22F 3/105* (2006.01)   *C22C 38/00* (2006.01)
*C22C 38/02* (2006.01)   *C22C 38/04* (2006.01)
*C22C 38/06* (2006.01)   *C22C 38/42* (2006.01)
*C22C 38/44* (2006.01)   *C22C 38/46* (2006.01)
*C22C 38/48* (2006.01)   *C22C 38/50* (2006.01)
*C22C 38/52* (2006.01)   *C22C 38/54* (2006.01)
*B22F 9/08* (2006.01)   *C22C 33/02* (2006.01)
*B33Y 70/00* (2020.01)   *B33Y 80/00* (2015.01)
*B22F 10/20* (2021.01)   *B33Y 10/00* (2015.01)

(54) **VERWENDUNG EINES STAHLS FÜR EIN ADDITIVES FERTIGUNGSVERFAHREN, VERFAHREN ZUR HERSTELLUNG EINES STAHLBAUTEILS UND STAHLBAUTEIL**

USE OF A STEEL FOR AN ADDITIVE PRODUCTION METHOD, METHOD FOR PRODUCING A STEEL COMPONENT AND STEEL COMPONENT

UTILISATION D'UN ACIER POUR UN PROCÉDÉ DE FABRICATION ADDITIVE, PROCÉDÉ DE FABRICATION D'UN COMPOSANT EN ACIER ET COMPOSANT EN ACIER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**08.01.2020 Patentblatt 2020/02**

(73) Patentinhaber: **Deutsche Edelstahlwerke Specialty Steel GmbH & Co. KG 58452 Witten (DE)**

(72) Erfinder:
• **van Soest, Frank**
  **47918 Tönisvorst (DE)**
• **Dr. Krull, Hans-Günter**
  **47506 Neukirchen-Vluyn (DE)**

(74) Vertreter: **Cohausz & Florack Patent- & Rechtsanwälte Partnerschaftsgesellschaft mbB Bleichstraße 14 40211 Düsseldorf (DE)**

(56) Entgegenhaltungen:
CA-A1- 3 005 378   CN-A- 107 214 336

• WEI MINGWEI ET AL: "Selective laser melting of 24CrNiMo steel for brake disc: Fabrication efficiency, microstructure evolution, and properties", OPTICS AND LASER TECHNOLOGY, Bd. 107, 26. Mai 2018 (2018-05-26), Seiten 99-109, XP085418159, ISSN: 0030-3992, DOI: 10.1016/J.OPTLASTEC.2018.05.033
• CHAOFAN SHI ET AL: "Preparation and printability of 24CrNiMo alloy steel powder for selective laser melting fabricating brake disc", POWDER METALLURGY., Bd. 61, Nr. 1, 13. November 2017 (2017-11-13), Seiten 73-80, XP055513196, GB ISSN: 0032-5899, DOI: 10.1080/00325899.2017.1396019

## Beschreibung

Die Erfindung betrifft die Verwendung eines Stahls als Stahlpulver für die Herstellung von Stahlbauteilen durch additive Fertigungsverfahren, ein Verfahren zur Herstellung eines Stahlbauteils unter Anwendung eines additiven Fertigungsverfahrens und ein durch die Verwendung eines solchen Stahls durch Anwendung eines additiven Fertigungsverfahrens hergestelltes Stahlbauteil.

Wenn nachfolgend "%"-Angaben zu Legierungen oder Stahlzusammensetzungen gemacht werden, so beziehen diese sich jeweils auf das Gewicht, soweit nichts ausdrücklich anderes angegeben ist.

Sämtlich der im vorliegenden Text angegebenen mechanischen Eigenschaften des erfindungsgemäß zu verwendenden Stahls und der gegebenenfalls zum Vergleich angeführten Stähle sind, soweit nicht anders angegeben, nach DIN EN ISO 6892-1 bestimmt worden.

Unter dem Begriff "additive Fertigungsverfahren" werden hier alle Herstellverfahren zusammengefasst, bei denen ein Werkstoff zur Erzeugung eines Bauteils hinzugefügt wird. Dabei erfolgt dieses Hinzufügen in der Regel schichtweise. "Additive Herstellverfahren", die in der Fachsprache oft auch als "generative Verfahren" oder allgemein als "3D-Drucken" bezeichnet werden, stehen damit im Gegensatz zu den klassischen subtraktiven Fertigungsverfahren, wie den spanenden Verfahren (z.B. Fräsen, Bohren und Drehen), bei denen Material abgetragen wird, um dem jeweils herzustellenden Bauteil seine Form zu verleihen. Ebenso unterscheiden sich additive Verfahren grundsätzlich von den konventionellen Massivformgebungsverfahren, wie Schmieden und desgleichen, bei denen unter Beibehaltung der Masse aus einem Ausgangs- oder Zwischenprodukt das jeweilige Stahlteil geformt wird.

Das additive Fertigungsprinzip ermöglicht es, geometrisch komplexe Strukturen herzustellen, die mit konventionellen Fertigungsverfahren, wie den schon genannten spanabhebenden Verfahren oder Umformverfahren (Gießen, Schmieden), nicht oder nur aufwendig realisiert werden können (s. VDI Statusreport "Additive Fertigungsverfahren", September 2014, herausgegeben vom Verein Deutscher Ingenieure e.V., Fachbereich Produktionstechnik und Fertigungsverfahren, www.vdi.de/statusadditiv).

Nähere Definitionen der Verfahren, die unter dem Oberbegriff "Additive Verfahren" zusammengefasst sind, finden sich beispielsweise in den VDI-Richtlinien 3404 und 3405.

In der Praxis kommen heute regelmäßig Pulver aus Stahllegierungen zum Einsatz, die aufgrund ihrer unter 0,30 Gew.-% liegenden Kohlenstoffgehalte eine ausreichende Schweißeignung besitzen. Das jeweils bereitgestellte Stahlpulver wird dann mit einem Elektronen- oder Laserstrahl in einem Vakuum aufgeschmolzen und aufgrund der kleinen flüssigen Menge gegenüber dem schon erzeugten Bauteil rasch abgekühlt. Durch die hohe Abkühlrate stellt sich häufig ein kritischer Spannungszustand im Bauteil ein, der insbesondere bei erhöhten Kohlenstoffgehalten zu Rissen führen kann.

Um die Gefahr von Spannungsrissen zu minimieren, ist es heute üblich, einen Stahl zu verwenden, der bei rascher Abkühlung einen möglichst weichen Gefügezustand bildet. Hier bieten sich Stähle an, die ein aus Weichmartensit oder Lanzettmartensit bestehendes Gefüge bilden. Beispiele für solche Stähle sind die sogenannten "Maraging-Stähle". Typische Exemplare dieser Stähle sind unter den Werkstoffnummern 1.2709, 1.6355, 1.4545 und 1.4542 in der Stahl-Eisen-Liste genormt. Alternativ werden auch austenitische Stähle, wie der Stahl 316L (Werkstoffnummer 1.4404), als Stahlpulver für die additive Fertigung eingesetzt. Nachteilig an diesen Stählen ist, dass sie in hohen Gehalten Legierungsbestanteile erfordern, die heute nur zu hohen Kosten erhältlich sind.

Die durch derartige additive Verfahren erzeugten Bauteile werden regelmäßig einer Nachbehandlung unterzogen, um die in ihnen üblicherweise herstellungsbedingt noch vorhandene Restporosität auf ein Minimum zu reduzieren. Die hierzu zur Verfügung stehenden Möglichkeiten sind im Stand der Technik hinlänglich beschrieben und beispielsweise in der DE 100 39 143 C1 zusammengefasst. Gegenstand dieser Patentschrift ist ein Verfahren zur Herstellung präziser Bauteile durch Lasersintern eines Pulvermaterials, das aus einer Mischung von mindestens zwei Pulverelementen besteht. Das Pulvermaterial ist durch den Hauptbestandteil Eisenpulver und weitere Pulverlegierungselemente gebildet, die in elementarer, vorlegierter oder teilweise vorlegierter Form vorliegen. Gleichzeitig ist der Lasersinterprozess so gesteuert, dass im Verlaufe des Lasersinterprozesses aus den Bestandteilen des Pulvers eine Pulverlegierung entsteht. Bei den Pulverlegierungselementen handelt es sich um Kohlenstoff, Silizium, Kupfer, Zinn, Nickel, Molybdän, Mangan, Chrom, Kobalt, Wolfram, Vanadium, Titan, Phosphor, Bor. Konkret betragen die für diese Bestandteile angegebenen Gehaltsspannen: C: 0,01 - 2 Gew.-%, Si: bis zu 1 Gew.-%, Cu: bis zu 10 Gew.-%, Sn: bis zu 2 Gew.-%, Ni: bis zu 10 Gew.-%, Mo: bis zu 6 Gew.-%, Mn: bis zu 2 Gew.-% oder 10 - 13 Gew.-%, Cr: bis zu 5 Gew.-% oder 12 - 18 Gew.-%, Co: bis zu 2 Gew.-%, W: bis zu 5 Gew.- %, V: bis zu 1 Gew.-%, Ti: bis zu 0,5 Gew.-%, P: bis zu 1 Gew.-%, B: bis zu 1 Gew.-%.

Neben dem voranstehend erläuterten Stand der Technik ist aus der CN 107 214 336 A eine für die Verwendung als Pulver für ein additives Fertigungsverfahren vorgesehene Stahllegierung bekannt, die aus, in Gew.- %, 0,27 % C, 0,91 % Mn, 0,50 % Mo, 0,52 % Si, 0,97 % Cr, 0,98 % Ni, Rest Fe und unvermeidbaren Verunreinigungen besteht. Das aus dieser Legierung erzeugte Pulver weist einen Durchmesser von 15 - 53 $\mu$m auf und eignet sich insbesondere für die Verarbeitung im Selektiven Laserschmelzverfahren, das in der Praxis auch unter der Kurzbezeichnung "SLM" bekannt ist.

Vor diesem Hintergrund hat sich die Aufgabe ergeben, einen Stahl zu nennen, der als Stahlpulver besonders geeignet für die Verwendung zur Herstellung von Bauteilen durch ein additives Fertigungsverfahren geeignet ist und dabei kostengünstig legierbar ist.

Des Weiteren sollte ein auf einem solchen Stahlpulver aufsetzendes Verfahren genannt werden, dass die zuverlässige Herstellung von Bauteilen durch Anwendung eines additiven Fertigungsverfahrens erlaubt.

Schließlich sollte auch noch ein kostengünstig durch Anwendung eines additiven Verfahrens herstellbares, aus Stahl bestehendes Bauteil angegeben werden.

In Bezug auf die Verwendung eines Stahls als Stahlpulver für die additive Herstellung von Stahlbauteilen löst die Erfindung die Aufgabe nach Maßgabe von Anspruch 1.

Ein die voranstehend genannte Aufgabe erfindungsgemäß lösendes Verfahren ist in Anspruch 9 angegeben.

Schließlich wird die oben in Bezug auf das Bauteil genannte Aufgabe erfindungsgemäß dadurch gelöst, dass ein derartiges Bauteil aus einem erfindungsgemäß beschaffenen Stahlpulver und durch Anwendung des erfindungsgemäßen Verfahrens hergestellt ist.

Vorteilhafte Ausgestaltungen der Erfindung sind in den abhängigen Ansprüchen angegeben und werden nachfolgend wie der allgemeine Erfindungsgedanke im Einzelnen erläutert.

Die Erfindung geht von der Erkenntnis aus, dass sich eine Modifikation eines Stahls, der grundsätzlich aus der EP 3 168 312 A1 bereits für die schmiedetechnische Erzeugung von Bauteilen bekannt ist, in besonderem Maße auch als Werkstoff für die Herstellung von Stahlbauteilen durch Anwendung eines additiven Fertigungsverfahrens eignet. Die heute üblicherweise für die additive Fertigung verwendeten weichmartensitischen Stähle benötigen zum Einstellen der Gebrauchshärte hohe Anteile an teuren Legierungselementen wie Co, Ni und Mo und eine anschließende Wärmebehandlung. Die auf Stähle mit austenitischem Gefüge aufbauenden, aus der Praxis bekannten Lösungen sind stark begrenzt hinsichtlich einer maximal zu erreichenden Festigkeit.

Die Erfindung schlägt demgegenüber zur Verwendung als Pulver für die Herstellung eines Stahlbauteils durch additive Fertigung, bei der durch eine Vielzahl von Wiederholungen der Arbeitsschritte "Aufbringen einer Lage eines Stahlpulvers auf einer zuvor erzeugten Stahllage", "Aufschmelzen der aufgebrachten Stahlpulverlage", "Abkühlung der durch das Aufschmelzen erzeugten Stahllage" das Stahlbauteil sukzessive aus einer entsprechenden Anzahl von Stahllagen aufgebaut wird, eine Werkstoffzusammensetzung vor, die ein großes Fenster für die Abkühlgeschwindigkeit zum Einstellen eines gegenüber Martensit weniger festen bainitischen Gefüges eröffnet.

So wird erfindungsgemäß ein Stahl in Form von Stahlpulver mit einem mittleren Korndurchmesser von 5 - 150 μm für die Herstellung von Stahlbauteilen in einem additiven Verfahren verwendet, der aus (in Gew.-%) 0,08 - 0,35 % C, bis zu 0,80 % Si, 0,20 - 2,00 % Mn, bis zu 4,00 % Cr, 0,3 - 3,0 % Mo, 0,004 - 0,020 % N, 0,004 - 0,050 % Al, bis zu 0,0025 % B, mindestens ein Element aus der Gruppe "Nb, Ti, V, S " mit der Maßgabe, dass der Nb-Gehalt 0,003 - 0,20 Gew.-%, der Ti-Gehalt 0,001 - 0,02 Gew.-%, der V-Gehalt 0,02 - 0,40 Gew.-% und/oder der S-Gehalt 0,001 - 0,4 Gew.-% beträgt, bis zu 1,5 % Ni, bis zu 0,3 % Cu, bis zu 2,0 % Co und als Rest aus Eisen und unvermeidbaren Verunreinigungen besteht, wobei der Al-Gehalt %Al, der Nb-Gehalt %Nb, der Ti-Gehalt %Ti, der V-Gehalt %V und der N-Gehalt %N des Stahls folgende Bedingung erfüllen: %Al/27 + %Nb/45 + %Ti/48 + %V/25 > %N/3,5. Dabei gehören zu den herstellungsbedingt unvermeidbaren Verunreinigungen alle Elemente, die in Bezug auf die hier interessierenden Eigenschaften in legierungstechnisch unwirksamen Mengen vorhanden sind und aufgrund der jeweils gewählten Route zur Erzeugung des Stahlpulvers oder des jeweils gewählten Ausgangsmaterials (Schrott) in den Stahl gelangen. Insbesondere gehören zu den unvermeidbaren Verunreinigungen auch Gehalte an P von bis zu 0,0035 Gew.-%.

Die erfindungsgemäß als Pulver für die additive Fertigung verwendete Stahllegierung ist so zusammengesetzt, dass es in Folge der mit der additiven Fertigung aufgrund von Wärmeleitung notwendig einhergehenden intrinsischen Wärmebehandlung, die sich aus dem lagenweise erfolgenden Aufschmelzen sukzessive aufgebrachten und aufgeschmolzenen Pulverschichten ergibt, zu festigkeitssteigernden Ausscheidungen von Karbiden, wie Sonderkarbiden, Karbonitriden oder Nitriden kommt. So tritt bei der erfindungsgemäß für die Verwendung als Stahlpulver für ein additives Fertigungsverfahren vorgesehenen Stahllegierung unter Ausnutzung der verfahrensimmanenten Wärmezufuhr eine Festigkeitssteigerung durch Ausscheidungsbildung ein, ohne dass es dazu einer gesonderten Wärmebehandlung bedarf. Dabei bildet der erfindungsgemäß zu verwendende Stahl ein homogenes bainitisches Gefüge aus, das trotz des Wegfalls einer gesonderten Wärmebehandlung gleichmäßige Eigenschaften über das Volumen des additiv gefertigten Bauteils gewährleistet. Der durch die erfindungsgemäß zu verwendende Stahllegierung ermöglichte homogene Gefügezustand gewährleistet geringe Eigenspannungen und damit ein geringes Rissrisiko.

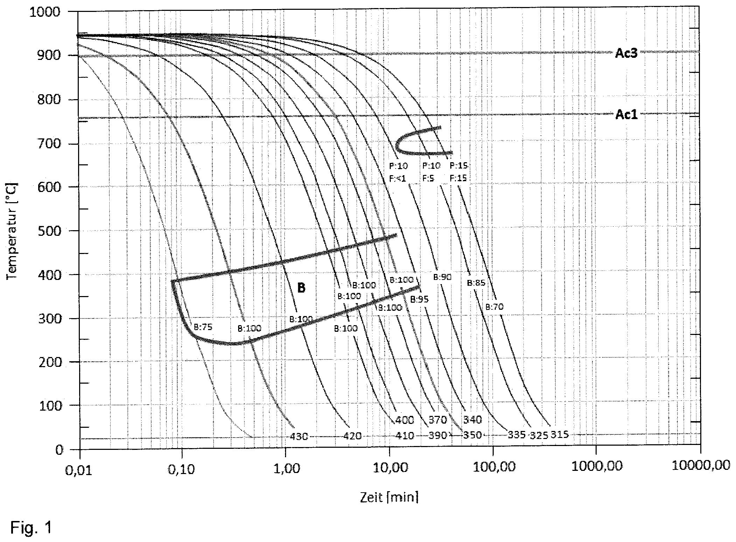

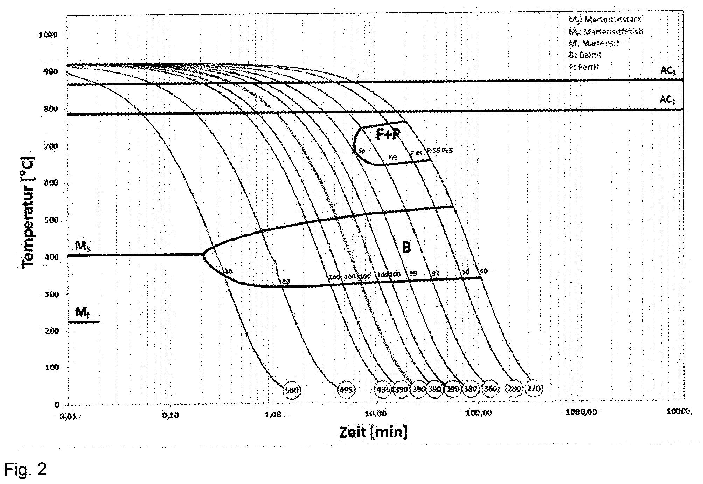

Hierbei zeigt sich die erfindungsgemäß für die Verwendung als Stahlpulver für ein additives Fertigungsverfahren ausgewählte Stahllegierung auch insoweit als besonders geeignet, als bei ihr die für die Ausbildung des bainitischen Gefüges kritische Abkühlgeschwindigkeit minimiert ist. D.h. die sich im Zeit-Temperatur-Diagramm (s. Figuren 1 und 2) zum erfindungsgemäß zu verwendenden Stahl sich ergebende "Bainitnase B" ist zu kurzen Abkühlzeiten hin verschoben, wie sie für die additive Fertigung typisch sind.

Wie anhand der Figuren 1 und 2 beispielhaft nachvollziehbar, bedeutet dies, dass es bei einem erfindungsgemäß zu verwendenden Stahl in einem besonders weiten Zeitfenster zur Ausprägung eines bainitischen Gefüges kommt, wenn der Stahl jeweils aus der Hitze abgekühlt wird, die beim Anschmelzen der jeweils bearbeiteten Pulverlage in das schichtweise aufgebaute Bauteil eingebracht wird. Hierbei ist durch die Legierung des erfindungsgemäß zu verwendenden Stahls sichergestellt, dass im Zuge der Abkühlung keine seine Eigenschaften beeinflussenden Mengen an Martensit oder Ferrit bzw. Perlit im Gefüge entstehen. Ein aus erfindungsgemäß zu verwendendem Stahl erzeugtes Stahlbauteil zeichnet sich somit dadurch aus, dass es ein zu mindestens 80 Vol.-% aus Bainit bestehendes Gefüge besitzt, wobei der Gehalt an nicht bainitschen Gefügebestandteilen in erfindungsgemäß erzeugten Stahlbauteilen typischerweise so stark minimiert ist, dass nach Abschluss der additiven Fertigung in ihm im technischen Sinne ein vollständig bainitisches Gefüge vorliegt.

Der Stahl, der erfindungsgemäß als Stahlpulver für die additive Fertigung verwendet wird, muss bis zu 0,35 Gew.-% Kohlenstoff ("C") enthalten, um durch Karbidbildung zur Steigerung der Festigkeit des Werkstoffs beizutragen. So kann durch die Zugabe von jeweils 0,01 Gew.-% eine Festigkeitserhöhung von jeweils ca. 70 MPa bewirkt werden. Dieser Effekt setzt ab einem C-Gehalt von 0,08 Gew.-%, insbesondere ab einem Gehalt von mindestens 0,09 Gew.-% C, ein. Durch die Begrenzung des C-Gehalts auf höchstens 0,35 Gew.-% wird dabei erreicht, dass ein erfindungsgemäß zu verwendender Stahl trotz seiner maximierten Festigkeit gute Dehnungs- und Zähigkeitseigenschaften besitzt. Gleichzeitig trägt der vergleichbar geringe C-Gehalt bei einem erfindungsgemäß zu verwendenden Stahl auch zur Beschleunigung der Bainitumwandlung bei, so dass die Entstehung von unerwünschten Gefügebestandteilen vermieden wird. Eine optimierte Wirkung der Anwesenheit von C im erfindungsgemäß zu verwendenden Stahl kann dadurch erreicht werden, dass der C-Gehalt auf 0,08 — 0,25 Gew.-%, insbesondere 0,09 — 0,25 Gew.-%, eingestellt wird.

Silizium ("Si") unterdrückt die Zementitbildung und verschiebt die Ferritbildung zu kürzeren Zeiten. Der Si-Gehalt eines erfindungsgemäß zu verwendenden Stahls ist deshalb auf höchstens 0,80 Gew.-%, insbesondere auf höchstens 0,45 Gew.-%, beschränkt, um die Bainitumwandlung möglichst früh ablaufen zu lassen. Gleichzeitig tragen Si-Gehalte bis zu dieser Obergrenze zur Erhöhung der Festigkeit durch Mischkristallverfestigung bei.

Molybdän ("Mo") ist im erfindungsgemäß zu verwendenden Stahl in Gehalten von 0,3 - 3,0 Gew.-% vorhanden, um die Umwandlung des Gefüges in Ferrit oder Perlit zu verzögern. Diese Wirkung tritt insbesondere dann ein, wenn mindestens 0,6 Gew.-%, insbesondere mehr als 0,70 Gew.-% Mo, im Stahl vorhanden sind. Bei Gehalten von mehr als 3,0 Gew.-% tritt im erfindungsgemäß zu verwendenden Stahl keine wirtschaftlich vertretbare weitere Steigerung der positiven Wirkung von Mo mehr ein. Außerdem besteht oberhalb 3,0 Gew.-% Mo die Gefahr der Bildung einer molybdänreichen Karbidphase, welche die Zähigkeitseigenschaften negativ beeinflussen kann. Optimale Wirkungen von Mo im erfindungsgemäß zu verwendenden Stahl können erwartet werden, wenn der Mo-Gehalt mindestens 0,7 Gew.-% beträgt.

Als besonders effektiv haben sich dabei Mo-Gehalte von höchstens 2,0 Gew.-%, insbesondere höchstens 1,5 Gew.-% oder höchstens 1,0 Gew.-%, erwiesen.

Mangan ("Mn") ist in Gehalten von 0,20 - 2,00 Gew.-% im erfindungsgemäß zu verwendenden Stahl vorhanden, um die Zugfestigkeit und Streckgrenze durch Mischkristallbildung einzustellen. Ein Mindestgehalt von 0,20 Gew.-% Mn ist erforderlich, damit es zu einer Festigkeitssteigerung kommt. Soll dieser Effekt besonders sicher erreicht werden, so kann ein Mn-Gehalt von mindestens 0,35 Gew.-% vorgesehen werden. Zu hohe Mn-Gehalte würden jedoch zur Verzögerung der Bainitumwandlung und damit zu einer überwiegend martensitischen Umwandlung führen. Daher ist der Mn-Gehalt auf höchstens 2,00 Gew.-%, insbesondere höchstens 1,5 Gew.-%, beschränkt. Negative Einflüsse der Anwesenheit von Mn lassen sich besonders sicher vermeiden, indem der Mn-Gehalt beim erfindungsgemäß zu verwendenden Stahl auf maximal 1,1 Gew.-% beschränkt wird.

Der Gehalt an Schwefel ("S") kann im erfindungsgemäß zu verwendenden Stahl bis zu 0,4 Gew.-%, insbesondere höchstens 0,1 Gew.-% betragen, um die Zerspanbarkeit des Stahls zu unterstützen. Gleichzeitig wird durch die Anwesenheit von S die Grenzflächenspannung der Tröpfchen beim Verdüsen vermindert, wodurch ein feineres Stahlpulver erhalten wird. Zu diesem Zweck kann ein S-Gehalt von mindestens 0,001 Gew.-% vorgesehen sein. Bei oberhalb von 0,4 Gew.-% liegenden S-Gehalten besteht die Gefahr der Entstehung von Rotbrüchigkeit. Optimale Wirkungen der Anwesenheit von S im erfindungsgemäß zu verwendenden Stahl können bei Gehalten von 0,003 - 0,1 Gew.-% erzielt werden.

Die legierungstechnische Feinjustierung in Bezug auf die mechanischen Eigenschaften und die Gefügebeschaffenheit eines erfindungsgemäß zu verwendenden Stahls erfolgt nach dem erfindungsgemäß zu verwendenden Legierungskonzept über eine kombinierte Mikrolegierung aus den Elementen Bor ("B") in optionalen Gehalten von bis zu 0,0025 Gew.-%, insbesondere mindestens 0,0005 Gew.-% B, Stickstoff ("N") in Gehalten von 0,004 - 0,020 Gew.-%, insbesondere mindestens 0,006 Gew.-% N oder bis zu 0,0150 Gew.-% N, Aluminium ("Al") in Gehalten von 0,004 - 0,050 Gew.-% sowie Niob ("Nb") in optionalen Gehalten von bis zu 0,20 Gew.-%, insbesondere mindestens 0,003 Gew.-% oder mindestens 0,005 Gew.-% Nb, wobei der Nb-Gehalt insbesondere auch auf höchstens 0,05 Gew.-% Nb beschränkt sein kann, Titan ("Ti") in optionalen Gehalten von bis zu 0,02 Gew.-%, insbesondere mindestens 0,001 Gew.-% oder mindestens 0,005 Gew.-% Ti, und Vanadium ("V") in optionalen Gehalten von bis zu 0,40 Gew.-%, insbesondere mindestens 0,01 Gew.-% oder mindestens 0,02 Gew.-% V.

Die Anwesenheit von N in den erfindungsgemäß vorgesehenen Gehalten ermöglicht dabei Bildung von Nitriden und Karbonitriden zur Festigkeitssteigerung und Erhöhung der Feinkornbeständigkeit, ohne dass es zur Versprödung kommt. So bildet Al mit N Aluminiumnitrid, das zur Feinkornstabilität beiträgt.

Die optionale Anwesenheit von B verzögert die Entstehung von Ferrit oder Perlit und sichert so die Entstehung des angestrebten bainitischen Gefüges im erfindungsgemäß zu verwendenden Stahl ab. Oberhalb von 0,0025 Gew.-% liegende B-Gehalte würden die Gefahr einer Versprödung mit sich bringen. Die jeweils ebenfalls optional vorhandenen Mikrolegierungselemente Nb, Ti und V bilden Karbonitride und können so einen wesentlichen Beitrag zur Optimierung der Feinkornstabilität und Festigkeit des erfindungsgemäß zu verwendenden Stahls leisten.

Um die Vorteile der Anwesenheit der Mikrolegierungselemente und von Aluminium sicher zu nutzen, kann es zweckmäßig sein, den Al-Gehalt auf mindestens 0,005 Gew.-%, den Ti-Gehalt auf mindestens 0,001 Gew.-%, den V-Gehalt auf mindestens 0,02 Gew.-% oder den Nb-Gehalt auf mindestens 0,003 Gew.-% einzustellen. Dabei können die Mikrolegierungselemente V, Ti, Nb einerseits und Al andererseits jeweils in Kombination mit einem oder mehreren Elementen der Gruppe "Al, V, Ti, Nb" oder alleine in oberhalb der genannten Mindestgehalte liegenden Mengen vorhanden sein. Bei Gehalten von bis zu 0,01 Gew.-% Ti, von bis zu 0,025 Gew.-% Nb, von bis zu 0,075 Gew.-% V oder von bis zu 0,040 Gew.-% Al lassen sich die Wirkungen dieser Elemente im erfindungsgemäß zu verwendenden Stahl besonders wirksam nutzen. Auch hier können die genannten Obergrenzen der Gehalte an Ti, Nb, V oder Al jeweils alleine oder in Kombination miteinander eingehalten werden, um die jeweils optimale Wirkung des betreffenden Legierungselements zu erzielen. Die Gehalte %Al, %Nb, %Ti, %V und %N an Al, Nb, Ti, V und N sind dabei im erfindungsgemäß zu verwendenden Stahl über die Bedingung

$$\%Al/27 + \%Nb/45 + \%Ti/48 + \%V/25 > \%N/3,5$$

so miteinander verknüpft, dass der im erfindungsgemäß zu verwendenden Stahl enthaltene Stickstoff über die jeweils vorhandenen Gehalte an Al sowie die gegebenenfalls zusätzlich zugegebenen Gehalte an Nb, Ti und V vollständig abgebunden ist und Bor somit umwandlungsverzögernd wirken kann. Die erfindungsgemäße Abbindung von N ermöglicht darüber hinaus, dass das optional vorhandene Bor als gelöstes Element in der Matrix des Stahls wirksam wird und die Bildung von Ferrit und oder Perlit unterdrückt.

Optional vorhandene Gehalte an Chrom ("Cr") von bis zu 4,00 Gew.-%, insbesondere bis zu 3 Gew.-% oder bis zu 2,5 Gew.-%, tragen durch die Bildung von Sonderkarbiden und Chromnitriden bei einer gegebenenfalls durchgeführten Nitrierbehandlung zur Härtbarkeit und Korrosionsbeständigkeit des erfindungsgemäß zu verwendenden Stahls bei. Hierzu können beispielsweise mindestens 0,5 Gew.-% oder mindestens 0,8 Gew.-% Cr vorgesehen sein. Oberhalb von.4,00 Gew.-% liegende Cr-Gehalte würden eine unerwünschte Martensitbildung im Gefüge des erfindungsgemäß zu verwendenden Stahls begünstigen.

Ebenso optional vorhandene Gehalte an Ni von bis zu 1,5 Gew.-% verbessern die Zähigkeit des erfindungsgemäß zu verwendenden Stahls. Falls dieser Effekt genutzt werden soll, tritt er ab einem Ni-Gehalt von mindestens 0,1 Gew.-%, insbesondere mindestens 0,15 Gew.-%, ein.

Zu den über das Ausgangsmaterial in den erfindungsgemäß zu verwendenden Stahl gelangenden oder gezielt zugegebenen Legierungselementen gehört auch Cu, dessen Gehalt zur Vermeidung von negativen Einflüssen im erfindungsgemäß zu verwendenden Stahl auf max. 0,3 Gew.-%, insbesondere weniger als 0,3 Gew.-%, begrenzt ist.

Optional im erfindungsgemäß zu verwendenden Stahl vorhandenes Kobalt ("Co") bewirkt in Gehalten von bis zu 2,0 Gew.-% eine Verschiebung der Bainitbildung zu kürzeren Zeiten. Der positive Einfluss von Co kann dabei insbesondere bei Co-Gehalten von mindestens 0,1 Gew.-%, insbesondere mindestens 0,5 Gew.-%, genutzt werden.

Den voranstehenden Erläuterungen entsprechend umfasst ein erfindungsgemäßes Verfahren zur Herstellung eines Stahlbauteils folgende Arbeitsschritte:

a) Erschmelzen einer nach Maßgabe der Erfindung verwendeten und zusammengesetzten Stahlschmelze;

b) Erzeugen eines Stahlpulvers aus der im Arbeitsschritt a) erschmolzenen Stahlschmelze, wobei die Körner des Stahlpulvers einen mittleren Durchmesser von 5 — 150 μm besitzen;

c) Herstellen des Bauteils durch Anwendung eines additiven Fertigungsverfahrens,

c.1) bei dem mindestens eine Portion des Stahlpulvers volumenabschnittsweise einer zeitlich begrenzten Wärmezufuhr mit anschließender Abkühlung ausgesetzt wird, so dass die Stahlpulverpartikel, die im erwärmten Volumenabschnitt vorhanden sind und jeweils aneinander angrenzen, eine stoffschlüssige Verbindung eingehen und nach der Abkühlung zu mindestens einem Volumenabschnitt des herzustellenden Bauteils verfestigt sind;

c.2) bedarfsweise erneutes Auftragen einer weiteren Portion des Stahlpulvers auf den im Arbeitsschritt c.1) verfestigten Volumenabschnitt und Wiederholen des Arbeitsschritts c.1) mit der weiteren Portion des Stahlpulvers, wobei die Arbeitsschritte c.1) und c.2) wiederholt werden, bis das herzustellende Bauteil vollständig fertig geformt ist;

d) optionales formgebendes mechanisches, insbesondere spanabhebendes, Bearbeiten der Bauteile;

e) optionales abschließendes Wärmebehandeln des erhaltenen Bauteils zur Bildung von festigkeitssteigernden Ausscheidungen im Gefüge des Bauteils.

Die Herstellung des aus erfindungsgemäß zu verwendendem Stahl bestehenden Stahlpulvers kann in konventioneller Weise beispielsweise durch Gasverdüsen oder jedes andere geeignete Verfahren erfolgen. Hierzu kann eine nach Maßgabe der Erfindung erschmolzene Stahlschmelze beispielsweise durch Gas- oder Wasserverdüsen oder eine Kombination aus diesen beiden Verdüsungsverfahren zu dem Stahlpulver zerstäubt werden. Erforderlichenfalls werden aus den so erhaltenen Pulverpartikeln für die erfindungsgemäße Weiterverarbeitung durch Sieben diejenigen selektiert, die eine geeignete Korngröße besitzen. Hier haben sich Körner mit einem mittleren Durchmesser von 5 - 150 $\mu$m als für die erfindungsgemäßen Zwecke geeignet erwiesen.

Wie erläutert, wird durch Einstellung der Legierung des erfindungsgemäß als Stahlpulver verwendeten Stahls das Gefüge des erfindungsgemäß erzeugten Stahlbauteils bestimmt. Hier zeichnet sich ein erfindungsgemäß erzeugtes Bauteil dadurch aus, dass es ein zu mindestens 80 Vol.-% aus Bainit bestehendes, insbesondere im technischen Sinne vollständig bainitisches Gefüge, aufweist.

Das erfindungsgemäß zu verwendende Stahlpulver eignet sich für jedes additive Fertigungsverfahren der eingangs erläuterten, aus dem Stand der Technik bekannten Art, bei dem es durch lokale Wärmezufuhr zum Verschmelzen der aneinander angrenzenden, von der zugeführten Wärme erfassten Partikel und damit einhergehend bei der anschließenden Abkühlung zur Verfestigung der so behandelten Stahlpulverportion im jeweils abzubildenden Abschnitt des zu erzeugenden Bauteils kommt. Insbesondere eignen sich für die erfindungsgemäße Bauteilerzeugung die bekannten Laserschmelz- und Lasersinterverfahren, welche ein präzise begrenztes, intensives Erwärmen der Stahlpulverpartikel und eine entsprechend exakte Abbildung des herzustellenden Bauteils erlauben.

Optional können die Festigkeit und Zähigkeit eines erfindungsgemäß erzeugten Stahlbauteils über eine konventionelle Wärmebehandlung eingestellt werden. Diese Wärmebehandlung kann ein Feinjustieren des bainitischen Gefüges des erfindungsgemäß erzeugten Stahlbauteils umfassen, bei dem das Stahlbauteil auf eine oberhalb der Ac3-Temperatur liegenden Austenitisierungstemperatur durcherwärmt und anschließend von der Austenitisierungstemperatur an Luft oder in Öl abgekühlt wird, wobei die Abkühlung mit einer für die Einstellung des angestrebten möglichst vollständigen Bainitgefüges ausreichenden Abkühlgeschwindigkeit von mindestens 0,5 K/s und weniger als 300 K/s, insbesondere 3,0 - 300 K/s, vorgenommen wird. Bei dieser Wärmebehandlung erweist es sich insbesondere als vorteilhaft, wenn der erfindungsgemäß zu verwendende Stahl einen B-Gehalt von 0,0005 - 0,0025 Gew.-% aufweist. Die Anwesenheit derartiger B-Gehalte verhindert hier besonders effektiv, dass es im Zuge der Abkühlung zur Bildung von unerwünschtem Ferrit oder Perlit im Gefüge des Stahlbauteils kommt.

Optional kann alternativ oder zusätzlich zu der voranstehend erläuterten, ebenfalls optional vorgenommenen Feinjustage des Gefüges eine Anlassbehandlung durchgeführt werden, bei der das Stahlbauteil bei einer Temperatur von 450 - 600 °C über eine Dauer von 0,5 - 6 Stunden gehalten wird, wobei die konkret vorgesehene Dauer der Anlassbehandlung in Abhängigkeit von Größe und Volumen des Stahlbauteils gewählt werden kann, um die schon erwähnte, sich auch im Zuge der additiven Fertigung bereits einstellende Festigkeitssteigerung durch Sonderkarbidbildung noch einmal gezielt zu unterstützen.

Erfindungsgemäß erzeugte Stahlbauteile weisen schon nach Abschluss der additiven Fertigung (Arbeitsschritt d), d.h. vor dem Arbeitsschritt e), eine Zugfestigkeit von mindestens 900 MPa, insbesondere mindestens 1145 MPa, eine Streckgrenze von mindestens 560 MPa, insbesondere mindestens 675 MPa, und eine Bruchdehnung A5,65 von mindestens 8 % auf.

Durch die jeweils optional durchgeführten Wärmebehandlungsschritte (Arbeitsschritt e) können die mechanischen Eigenschaften eines erfindungsgemäßen Stahlbauteils so weit verbessert werden, dass seine Zugfestigkeit mindestens 1050 MPa, insbesondere mindestens 1230 MPa, seine Streckgrenze mindestens 615 MPa, insbesondere mindestens 750 MPa, und seine Bruchdehnung A5,65 mindestens 8 % beträgt.

Nachfolgend wird die Erfindung anhand von Ausführungsbeispielen näher erläutert. Es zeigen:

Fig. 1    das ZTU-Schaubild des als Stahlpulver für die additive Fertigung verwendeten Stahls S1;

Fig. 2    das ZTU-Schaubild des gemäß als Stahlpulver für die additive Fertigung verwendeten Stahls S2.

Es sind drei erfindungsgemäße Schmelzen S1, S2, S3 erschmolzen und auf konventionelle Weise im Gasstrom jeweils zu Stahlpulver mit einer Korngröße von 5 - 150 μm verdüst worden. Die Zusammensetzung der Schmelzen S1 — S3 ist in Tabelle 1 angegeben.

Aus den erhaltenen Stahlpulvern sind durch Anwendung des sogenannten "Selective Laser Melting" ("3D-Druck / SLM-Verfahren") Stahlbauteile erzeugt worden, bei dem es sich um Testkörper zur Bestimmung der optimalen Parameter für die additive Fertigung, nämlich Würfel mit ca. 20 mm Kantenlänge, und Rohlinge für Zug- und Kerbschlagproben handelte.

Die Zugfestigkeit Rm_V der nach der additiven Fertigung erhaltenen Stahlbauteile ist in Tabelle 2 genannt.

Die so beschaffenen Stahlbauteile sind einer spanabhebenden Bearbeitung unterzogen worden, um sie an die von ihnen jeweils geforderte Endform optimal anzupassen.

Anschließend haben die Bauteile jeweils eine Wärmebehandlung durchlaufen, bei der sie für eine Dauer tA bei einer Temperatur TA ausgelagert worden sind. Auch die jeweilige Auslagerungsdauer tA und Auslagerungstemperatur TA sind in Tabelle 2 genannt.

Ebenso sind in Tabelle 2 die Zugfestigkeit Rm_N genannt, die die Bauteile nach der mechanischen Bearbeitung und dem Auslagern aufwiesen.

Zusätzlich sind in Tabelle 2 auch das Gefüge der Bauteile genannt.

Aus den in den Figuren 1 und 2 wiedergegebenen ZTU-Schaubildern zu den Stählen S1 (Fig. 1) und S2 (Fig. 2) ist ersichtlich, dass sich bei den Stählen S1, S2 bei der Abkühlung aus der hohen Temperatur, die die aus den Stählen S1 und S2 erzeugten Stahlpulver beim Aufschmelzen im Zuge der additiven Fertigung erreichen, das zunächst austenitische Gefüge vollständig in Bainit, insbesondere in eine bainitische Umwandlungsstufe, umwandelt. Dabei stellt sich weitgehend unabhängig von der Abkühlgeschwindigkeit im Bainitbereich eine nahezu konstante Härte auf.

Angaben in Gew.-%, Rest Eisen und unvermeidbare Verunreinigungen Tabelle 1

| Schmelze: | S1 | S2 | S3 |
|---|---|---|---|
| C | 0,10 | 0,17 | 0,20 |
| Si | 0,78 | 0,33 | 0,35 |
| Mn | 1,42 | 0,72 | 0,50 |
| Mo | 0,52 | 0,70 | 0,72 |
| Ni | 0,17 | 0,24 | 0,17 |
| Al | 0,025 | 0,025 | 0,031 |
| Ti | 0,01 | 0,01 | 0,01 |
| Cu | 0,05 | 0,05 | 0,03 |
| Cr | 0,4 | 2,00 | 1,80 |
| Co | 0,01 | 0,01 | 0,82 |
| N | 0,01 | 0,01 | 0,01 |
| S | 0,02 | 0,005 | 0,004 |
| B | 0,0011 | 0,0012 | 0,0 |
| Nb | 0,01 | 0,02 | 0,02 |
| V | 0,04 | 0,10 | 0,10 |

Tabelle 2

| Schmelze | Rm_V [MPa] | tA [h] | TA [°C] | Rm_N [MPa] | Gefüge [Vol.-%] |
|---|---|---|---|---|---|
| S1 | 1080 | 4 | 450 | 1125 | 100 % Bainit |
| S2 | 1110 | 1 | 600 | 1213 | 3 % angelassener Martensit, 97 % Bainit |
| S3 | 1135 | 1 | 575 | 1245 | 100 % Bainit |

**Patentansprüche**

1. Verwendung eines Stahls, der aus (in Gew.-%):

| | |
|---|---|
| C: | 0,08 - 0,35%, |
| Si: | 0 - 0,80%, |
| Mn: | 0,20 - 2,00%, |
| Cr: | 0 - 4,00%, |
| Mo: | 0,3 - 3,0%, |
| N: | 0,004 - 0,020 %, |
| Al: | 0,004 - 0,050 %, |
| B: | 0 - 0,0025 %, |

mindestens ein Element aus der Gruppe "Nb, Ti, V, S " mit der Maßgabe, dass

der Nb-Gehalt 0,003 — 0,20 Gew.-%,
der Ti-Gehalt 0,001 - 0,02 Gew.-%,
der V-Gehalt 0,02 - 0,40 Gew.-% und/oder
der S-Gehalt 0,001 - 0,4 Gew.-%
beträgt,

| | |
|---|---|
| Ni: | 0 - 1,5%, |
| Cu: | 0 - 0,3 %, |
| Co: | 0 - 2, 0 %, |

Rest Eisen und unvermeidbaren Verunreinigungen, wobei zu den Verunreinigungen bis zu 0,0035 Gew.-% P gehören,
besteht, wobei der Al-Gehalt %Al, der Nb-Gehalt %Nb, der Ti-Gehalt %Ti, der V-Gehalt %V und der N-Gehalt %N des Stahls folgende Bedingung erfüllen:

$$\%Al/27 + \%Nb/45 + \%Ti/48 + \%V/25 > \%N/3{,}5,$$

als Stahlpulver zur Herstellung von Stahlbauteilen durch ein additives Fertigungsverfahren, wobei die Körner des Stahlpulvers einen mittleren Durchmesser von 5 — 150 μm besitzen.

2. Verwendung nach Anspruch 1, **dadurch gekennzeichnet, dass** der als Stahlpulver verwendete Stahl einen C-Gehalt von mindestens 0,09 Gew.-% hat.

3. Verwendung nach einem der voranstehenden Ansprüche, **dadurch gekennzeichnet, dass** der als Stahlpulver verwendete Stahl einen Cr-Gehalt von mindestens 0,5 Gew.-% hat.

4. Verwendung nach einem der voranstehenden Ansprüche, **dadurch gekennzeichnet, dass** der S-Gehalt des als Stahlpulver verwendeten Stahls mindestens 0,003 - 0,1 Gew.-% beträgt.

5. Verwendung nach einem der voranstehenden Ansprüche, **dadurch gekennzeichnet, dass** der als Stahlpulver verwendete Stahl einen B-Gehalt von mindestens 0,0005 Gew.-% hat.

6. Verwendung nach einem der voranstehenden Ansprüche, **dadurch gekennzeichnet, dass** der als Stahlpulver verwendete Stahl einen N-Gehalt von mindestens 0,006 Gew.-% hat.

7. Verwendung nach einem der voranstehenden Ansprüche, **dadurch gekennzeichnet, dass** der als Stahlpulver verwendete Stahl einen Cu-Gehalt von weniger 0,3 Gew.-% hat.

8. Verwendung nach einem der voranstehenden Ansprüche, **dadurch gekennzeichnet, dass** der als Stahlpulver verwendete Stahl einen Mo-Gehalt von weniger 0,7 Gew.-% hat.

9. Verfahren zur Herstellung eines Stahlbauteils umfassend folgende Arbeitsschritte:

a) Erschmelzen eines nach Maßgabe der voranstehenden Ansprüche verwendeten und zusammengesetzten Stahls;
b) Erzeugen eines Stahlpulvers aus dem im Arbeitsschritt a) erschmolzenen Stahl, wobei die Körner des Stahlpulvers einen mittleren Durchmesser von 5 — 150 μm besitzen;
c) Herstellen des Bauteils durch Anwendung eines additiven Fertigungsverfahrens,

c.1) bei dem mindestens eine Portion des Stahlpulvers volumenabschnittsweise einer zeitlich begrenzten Wärmezufuhr mit anschließender Abkühlung ausgesetzt wird, so dass die Stahlpulverpartikel, die im erwärmten Volumenabschnitt vorhanden sind und jeweils aneinander angrenzen, eine stoffschlüssige Verbindung eingehen und nach der Abkühlung zu mindestens einem Volumenabschnitt des herzustellenden Bauteils verfestigt sind;
c.2) bedarfsweise erneutes Auftragen einer weiteren Portion des Stahlpulvers auf den im Arbeitsschritt c.1) verfestigten Volumenabschnitt und Wiederholen des Arbeitsschritts c.1) mit der weiteren Portion des Stahlpulvers, wobei die Arbeitsschritte c.1) und c.2) wiederholt werden, bis das herzustellende Bauteil vollständig fertig geformt ist;

d) optionales formgebendes Bearbeiten der Bauteile;
e) optionales abschließendes Wärmebehandeln des erhaltenen Bauteils zur Bildung von festigkeitssteigernden Ausscheidungen im Gefüge des Bauteils.

10. Verfahren nach Anspruch 9, **dadurch gekennzeichnet, dass** die optionale Wärmebehandlung (Arbeitsschritt e)) als Auslagerung durchgeführt wird, bei der das Bauteil über eine Dauer von 0,5 — 6 Stunden bei einer Temperatur von 450 - 600 °C gehalten wird.

11. Stahlbauteil hergestellt aus einem gemäß Anspruch 1 als Stahlpulver verwendeten Stahls durch Anwendung eines gemäß Anspruch 9 oder 10 ausgebildeten Verfahrens.

12. Stahlbauteil nach Anspruch 11, **dadurch gekennzeichnet, dass** das Gefüge des Stahlbauteils zu mindestens 80 Vol.-% aus Bainit und der Rest des Gefüges aus Restaustenit, Ferrit, Perlit oder Martensit besteht.

13. Stahlbauteil nach Anspruch 11 oder 12, **dadurch gekennzeichnet, dass** jeweils vor dem optionalen Arbeitsschritt e) seine Zugfestigkeit mindestens 900 MPa, seine Streckgrenze mindestens 560 MPa und seine Bruchdehnung A5,65 mindestens 8 % beträgt.

14. Stahlbauteil nach einem der Ansprüche 11 - 13, **dadurch gekennzeichnet, dass** jeweils nach dem optionalen Arbeitsschritt e) seine Zugfestigkeit mindestens 1050 MPa, seine Streckgrenze mindestens 615 MPa und seine Bruchdehnung A5,65 mindestens 8 % beträgt.

**Claims**

1. Use of a steel which comprises (in wt%):

| | |
|---|---|
| C: | 0.08 - 0.35%, |
| Si: | 0 - 0.80%, |
| Mn: | 0.20 - 2.00%, |
| Cr: | 0 - 4.00%, |
| Mo: | 0.3 - 3.0%, |
| N: | 0.004 - 0.020%, |
| Al: | 0.004 - 0.050%, |
| B: | 0 - 0.0025%, |

at least one element from the group "Nb, Ti, V, S" with the proviso that

the Nb content is 0.003-0.20 wt%,
the Ti content is 0.001-0.02 wt%,
the V content is 0.02-0.40 wt%
and/or
the S content is 0.001-0.4 wt%,

| | |
|---|---|
| Ni: | 0 - 1.5%, |
| Cu: | 0 - 0.3%, |
| Co: | 0 - 2.0%, |

with the remainder being iron and unavoidable impurities, wherein the unavoidable impurities have a P content of up to 0.0035 wt% wherein the Al content %Al, the Nb content %Nb, the Ti content %Ti, the V content %V and the N content %N of the steel satisfy the following condition:

$$\%Al/27 + \%Nb/45 + \%Ti/48 + \%V/25 > \%N/3.5,$$

as a steel powder for the production of steel components by an additive manufacturing process, wherein the grains of the steel powder have an average diameter of 5-150 µm.

2. Use according to claim 1, **characterised in that** the steel used as a steel powder has a C content of at least 0.09 wt%.

3. Use according to any one of the preceding claims, **characterised in that** the steel used as a steel powder has a Cr content of at least 0.5 wt%.

4. Use according to any one of the preceding claims, **characterised in that** the S content of the steel used as a steel powder is at least 0.003-0.1 wt%.

5. Use according to any one of the preceding claims, **characterised in that** the steel used as a steel powder has a B content of at least 0.0005 wt%.

6. Use according to any one of the preceding claims, **characterised in that** the steel used as a steel powder has an N content of at least 0.006 wt%.

7. Use according to any one of the preceding claims, **characterised in that** the steel used as a steel powder has a Cu content of less than 0.3 wt%.

8. Use according to any one of the preceding claims, **characterised in that** the steel used as a steel powder has an Mo content of less than 0.7 wt%.

9. Method for producing a steel component, comprising the following steps:

a) melting a steel used and composed in accordance with the preceding claims;
b) producing a steel powder from the steel melted in step a), wherein the grains of the steel powder have an average diameter of 5-150 µm;
c) producing the component by using an additive manufacturing process,

c.1) in which at least one portion of the steel powder by volume is exposed to a temporary heat input with subsequent cooling, so that the steel powder particles, which are present in the heated volume portion and respectively adjoin each other, enter into a firmly-bonded connection and are solidified after cooling to form at least one volume portion of the component to be produced;
c.2) if necessary, re-applying a further portion of the steel powder to the volume portion solidified in step c.1) and repeating step c.1) with the further portion of the steel powder, wherein steps c.1) and c.2) are repeated until the component to be produced is completely finished;

d) optional machining to shape the components;

e) optional final heat treatment of the resulting component to form strength increasing precipitates in the structure of the component.

10. Method according to claim 9, **characterised in that** the optional heat treatment (step e)) is carried out as an ageing process, in which the component is held at a temperature of 450 - 600°C over a period of 0.5 - 6 hours.

11. Steel component produced from a steel used as a steel powder according to claim 1 by applying a method according to claim 9 or 10.

12. Steel component according to claim 11, **characterised in that** the structure of the steel component comprises at least 80 vol% bainite and the remainder of the structure comprises retained austenite, ferrite, perlite or martensite.

13. Steel component according to claim 11 or 12, **characterised in that** before the optional step e) its tensile strength is at least 900 MPa, its yield strength is at least 560 MPa and its elongation at break A5.65 is at least 8%.

14. Steel component according to any one of claims 11-13, **characterised in that** after the optional step e) its tensile strength is at least 1050 MPa, its yield strength is at least 615 MPa and its elongation at break A5.65 is at least 8%.

**Revendications**

1. Utilisation d'un acier composé de (en % en poids) :

|  |  |
|---|---|
| C : | 0,08 - 0,35 %, |
| Si: | 0 - 0,80 %, |
| Mn: | 0,20 - 2,00 %, |
| Cr: | 0 - 4,00 %, |
| Mo: | 0,3 - 3,0 %, |
| N : | 0,004 - 0,020 %, |
| Al : | 0,004 - 0,050 %, |
| B : | 0 - 0,0025 %, |

au moins un élément du groupe "Nb, Ti, V, S" avec la condition que,

la teneur en Nb soit de 0,003 à 0,20 % en poids,
la teneur en Ti soit de 0,001 à 0,02 % en poids,
la teneur en V soit de 0,02 à 0,40% en poids
et/ou
la teneur en S soit de 0,001 à 0,4 % en poids,

|  |  |
|---|---|
| Ni : | 0 - 1,5 %, |
| Cu : | 0 - 0,3 %, |
| Co : | 0 - 2,0 %, |

le reste étant du fer et des impuretés inévitables,
où lesdites impuretés comprennent jusqu'à 0,0035 % en poids de P, où la teneur en Al « %Al », la teneur en Nb « %Nb », la teneur en Ti « %Ti », la teneur en V « %V » et la teneur en N « %N » de l'acier satisfont à la condition suivante :

$$\%Al/27 + \%Nb/45 + \%Ti/48 + \%V/25 > \%N/3,5,$$

comme poudre d'acier pour la production de pièces en acier par un procédé de fabrication additive, où les grains de la poudre d'acier ont un diamètre moyen de 5 à 150 $\mu$m.

**2.** Utilisation selon la revendication 1, **caractérisée en ce que** l'acier utilisé comme poudre d'acier a une teneur en C d'au moins 0,09 % en poids.

**3.** Utilisation selon l'une des revendications précédentes, **caractérisée en ce que** l'acier utilisé comme poudre d'acier a une teneur en Cr d'au moins 0,5% en poids.

**4.** Utilisation selon l'une des revendications précédentes, **caractérisée en ce que** la teneur en S de l'acier utilisé comme poudre d'acier est d'au moins 0,003 à 0,1 % en poids.

**5.** Utilisation selon l'une des revendications précédentes, **caractérisée en ce que** l'acier utilisé comme poudre d'acier a une teneur en B d'au moins 0,0005% en poids.

**6.** Utilisation selon l'une des revendications précédentes, **caractérisée en ce que** l'acier utilisé comme poudre d'acier a une teneur en N d'au moins 0,006% en poids.

**7.** Utilisation selon l'une des revendications précédentes, **caractérisée en ce que** l'acier utilisé comme poudre d'acier a une teneur en Cu inférieure à 0,3% en poids.

**8.** Utilisation selon l'une des revendications précédentes, **caractérisée en ce que** l'acier utilisé comme poudre d'acier a une teneur en Mo inférieure à 0,7 % en poids.

**9.** Procédé de fabrication d'une pièce en acier comprenant les étapes de travail suivantes:

a) Fusion d'un acier utilisé et composé selon les revendications précédentes ;
b) Production d'une poudre d'acier à partir de l'acier porté à fusion dans l'étape a), les grains de la poudre d'acier ayant un diamètre moyen de 5 à 150 $\mu$m ;
c) Production de la pièce en utilisant un procédé de fabrication additive,

c.1) dans lequel au moins une portion de la poudre d'acier est soumise, section de volume par section de volume, à un apport de chaleur limité dans le temps suivi d'un refroidissement, de sorte que les particules de poudre d'acier présentes dans la section de volume chauffée et voisines les unes des autres forment une liaison matérielle et se solidifient, après refroidissement, pour former au moins une section de volume de la pièce à fabriquer ;
c.2) si nécessaire, application renouvelée d'une autre portion de la poudre d'acier sur la section de volume solidifiée à l'étape de travail c.1) et répétition de l'étape de travail c.1) avec la portion supplémentaire de la poudre d'acier, les étapes de travail c.1) et c.2) étant répétées jusqu'à ce que la pièce à fabriquer soit complètement formée ;

d) Façonnage facultatif des pièces ;
e) Traitement thermique final facultatif de la pièce obtenue pour former des précipités dans la structure de la pièce, lesquels précipités augmentant la résistance.

**10.** Procédé selon la revendication 9, **caractérisé en ce que** le traitement thermique optionnel (étape e)) est réalisé sous la forme d'un procédé de vieillissement, dans lequel la pièce est maintenue à une température de 450 à 600 °C pendant une période de 0,5 à 6 heures.

**11.** Pièce en acier fabriquée à partir d'un acier utilisé comme poudre d'acier selon la revendication 1 en utilisant un procédé mis en œuvre selon la revendication 9 ou 10.

**12.** Pièce en acier selon la revendication 11, **caractérisée en ce que** la structure de la pièce en acier consiste en au moins 80% en volume de bainite et le reste de la structure en austénite, ferrite, perlite ou martensite.

**13.** Pièce en acier selon la revendication 11 ou 12, **caractérisée en ce que**, dans chaque cas avant l'étape optionnelle e), sa résistance à la traction est d'au moins 900 MPa, sa limite d'élasticité est d'au moins 560 MPa et son allongement à la rupture A5,65 est d'au moins 8%.

**14.** Pièce en acier selon l'une quelconque des revendications 11 à 13, **caractérisée en ce que**, dans chaque cas, après l'étape de travail optionnelle e), sa résistance à la traction est d'au moins 1050 MPa, sa limite d'élasticité est d'au moins 615 MPa et son allongement à la rupture A5,65 est d'au moins 8%.

Fig. 1

EP 3 591 078 B1

Fig. 2

15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10039143 C1
- EP 3168312 A1